# EUROPEAN PATENT APPLICATION

(11) **EP 1 350 595 A2**
(43) Date of publication of application: **08.10.2003**
(21) Application number: 03005409.2
(22) Date of filing: 13.03.2003
(51) Int. Cl.: B23Q 11/08

(54) **Sealing structure**

(30) Priority: 28.03.2002 JP 2002090174
(71) Applicant: Mori Seiki Co., Ltd., Yamatokoriyama-shi, Nara 639-1160 (JP)
(72) Inventor: Fujii, Takeshi,, Yamatokoriyama-shi, Nara, 639-1160 (JP); Kojo, Koichi, Yamatokoriyama-shi, Nara, 639-1160 (JP)
(74) Representative: Reinhard - Skuhra - Weise & Partner

(57) **Abstract**

In a vertical machining center, side covers (22) are provided upright on a saddle on opposite sides of a column. The side covers (22) each have a surface having a fitting groove (22c) defined between an open/close door (22b) and an inspection window (22a) of a rhomboidal shape having anteroposteriorly inclined longitudinal edges. A front cover (25) is attached to the column. Elongate seal members (27) are respectively provided along opposite side edges of the front cover (25) as vertically extending in sliding contact with the surfaces of the side covers (22) for closing small gaps defined between the side edges of the front cover (25) and the surfaces of the side covers (22).

## Description

### BACKGROUND OF THE INVENTION

### Field of the Invention

The present invention relates to a sealing structure for closing a gap defined between a surface of an object and a member movable on the surface of the object by a seal member attached to the movable member in sliding contact with the surface of the object.

### Description of Related Art

A machine tool including a plurality of members movable in different directions (e.g., a machining center having a saddle, a column and a spindle head which are movable along an X-axis, a Y-axis and a Z-axis, respectively) generally includes various covers which are provided to isolate guide ways for guiding the respective movable members and ball threads for driving the respective movable members from a machining region for protection of these members from chips and the like. Some of these covers are provided in relatively movable manner, so that a gap is defined therebetween. Therefore, a sealing structure for closing a gap defined between two associated covers is employed which includes a seal member (e.g., a lip seal) attached to one of the covers in sliding contact with a surface of the other cover.

Since such a cover is provided for isolating the inside of the machine from the machining region as described above, it is often necessary to provide an inspection window in the cover for inspecting the inside of the machine. In general, an open/close door having a slightly smaller size than the inspection window provided in the cover and openable for inspection is removably fitted in the inspection window to close the inspection window. Therefore, a thin fitting groove is present in the surface of the cover between the open/close door and the peripheral edge of the inspection window.

Where the cover is too large to be formed of a single steel plate or the like, the cover is formed by combining a plurality of steel plates with each other with their opposed end faces abutting against each other. In this case, a thin abutment groove is present in the large cover along a juncture between the steel plates.

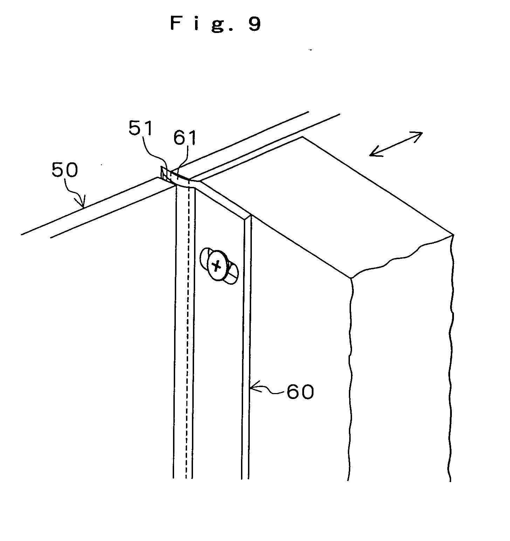

As shown in Fig. 9, when a seal member (e.g. lip seal) 60 is slid on a surface of a cover 50 having a thin groove 51 such as the fitting groove or the abutment groove to pass over the thin groove 51 present in the surface of the cover 50, a flexible edge portion 61 of the seal member 60 kept in press contact with the surface of the cover may enter the thin groove 51. When the seal member 60 is repeatedly moved in and out of the thin groove 51, the flexible edge portion 61 of the seal member 60 is liable to be broken or deformed. This makes it impossible to keep the seal member 60 into contact with the surface of the cover, deteriorating the sealing performance.

It is therefore an object of the present invention to provide a sealing structure for closing a gap defined between a surface of an object and a member movable on the surface of the object by a seal member attached to the movable member in sliding contact with the surface of the object, the seal member being unlikely to enter a thin groove present in the surface of the object.

### SUMMARY OF THE INVENTION

In accordance with a first aspect of the present invention to achieve the aforesaid object, there is provided a sealing structure comprising: an object having a surface having a thin groove; a member movable on the surface of the object with a gap defined between the movable member and the surface of the object; and a seal member attached to the movable member and having a flexible edge portion kept in sliding contact with the surface of the object for closing the gap by the flexible edge portion; wherein the seal member, which is moved in sliding contact with the surface of the object as the movable member is moved, is disposed as intersecting the thin groove present in the surface of the object.

In this sealing structure, the seal member moved in sliding contact with the surface of the object is disposed as intersecting the thin groove present in the surface of the object as described above. Hence, there is no possibility that the edge portion of the seal member enters the thin groove when the seal member passes over the thin groove present in the surface of the object. With this sealing structure, the breakage or deformation of the seal member can assuredly be prevented, leading to more reliable sealing performance.

Particularly, the present invention may be embodied as a sealing structure for a machine tool, which comprises a saddle movable laterally on a bed, a column movable back and forth on the saddle, a front cover attached to the column as covering a front surface of the column, a side cover having a surface having a thin groove and provided upright on the saddle along a direction of movement of the column with a gap defined between the side cover and a side edge of the front cover, and a seal member attached to the front cover and having a flexible edge portion kept in sliding contact with the surface of the side cover for closing the gap by the flexible edge portion. In this case, the seal member, which is moved in sliding contact with the surface of the side cover as the column is moved, is disposed as intersecting the thin groove present in the surface of the side cover.

The foregoing and other objects, features and effects of the present invention will become more apparent from the following description of the preferred embodiments with reference to the attached drawings.

### BRIEF DESCRIPTION OF THE DRAWINGS

Fig. 1 is a perspective view illustrating a vertical machining center which employs a sealing structure according to the present invention;
Fig. 2 is a front view illustrating the vertical machining center;
Fig. 3 is a schematic side view illustrating a positional relationship between side covers and a front cover in the vertical machining center;
Fig. 4 is a schematic plan view illustrating the positional relationship between the side covers and the front cover in the vertical machining center;
Fig. 5 is a schematic front view illustrating the positional relationship between the side covers and the front cover in the vertical machining center;
Figs. 6A to 6C are perspective views illustrating the movement of the front cover relative to the side covers in the vertical machining center;
Fig. 7 is a partially enlarged perspective view illustrating a seal member attached to the front cover;
Fig. 8 is a diagram illustrating a positional relationship between the seal member and an inspection window provided in the side cover, which is observed when the seal member passes over the inspection window; and
Fig. 9 is a diagram for explaining a problem associated with a prior art sealing structure.

### DESCRIPTION OF THE PREFERRED EMBODIMENTS

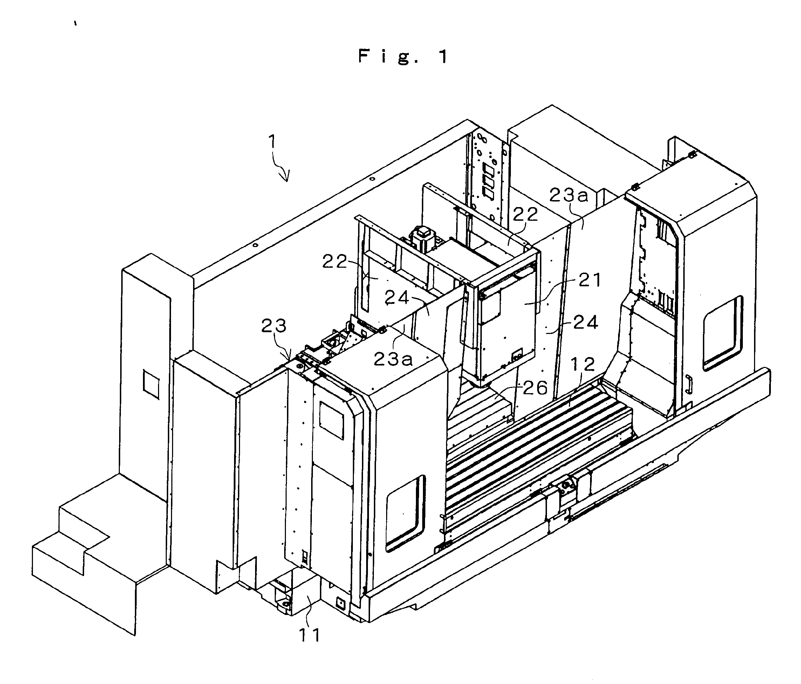

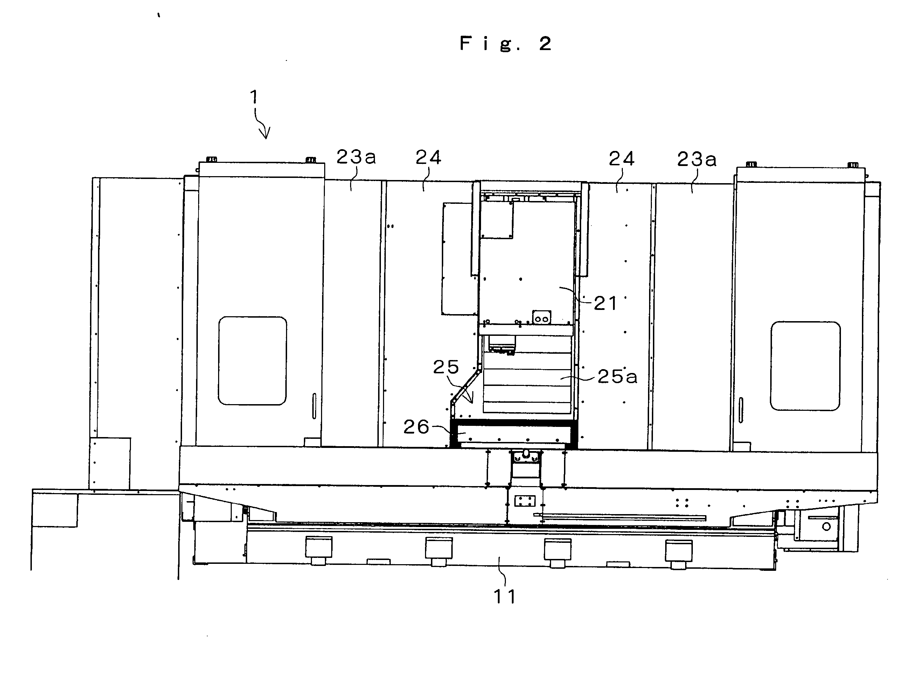

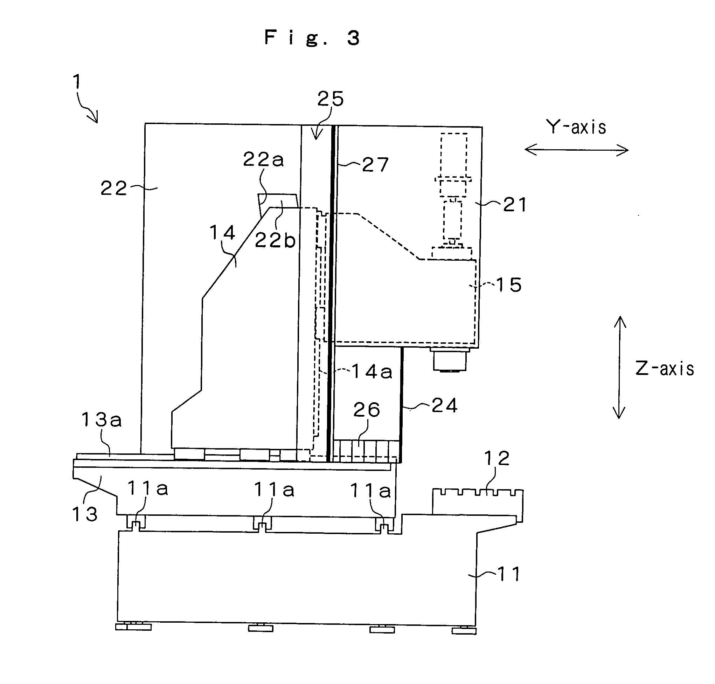

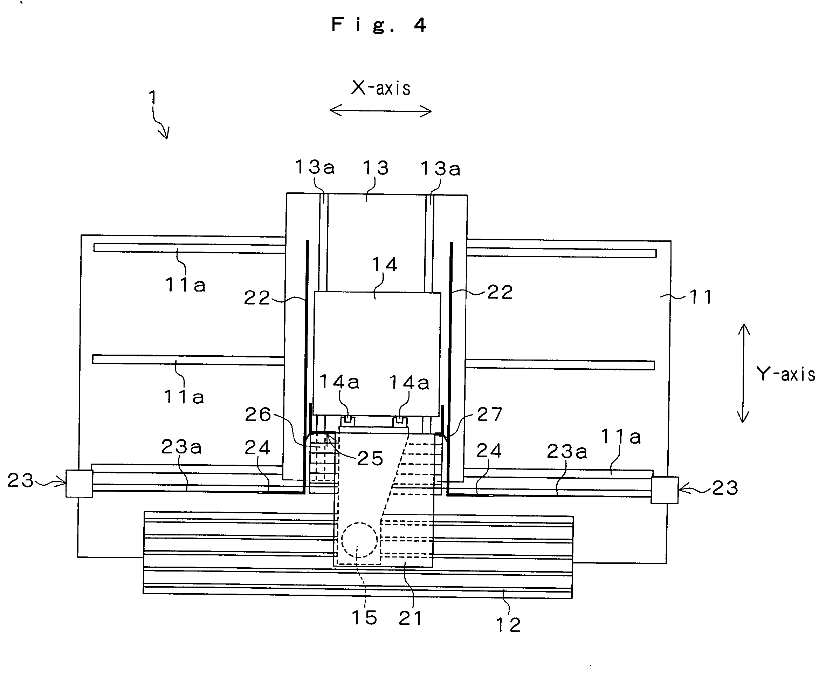

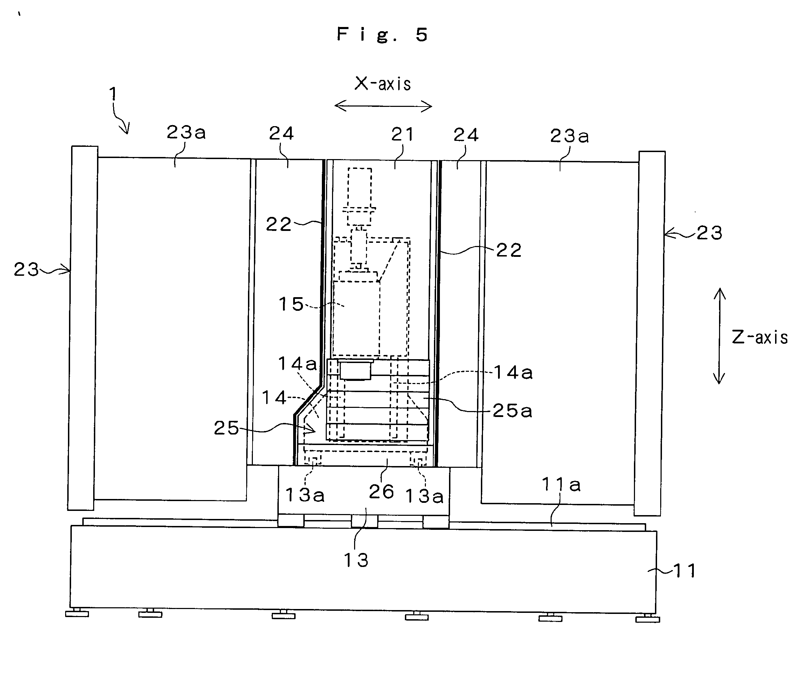

Preferred embodiments of the present invention will hereinafter be described with reference to the drawings. Figs. 1 to 5 illustrate a vertical machining center 1 which employs a sealing structure according to the present invention. As shown, the vertical machining center 1 includes a table 12 fixed to a front portion of a bed 11, a saddle 13 movable laterally of the table 12 (along an X-axis) on guide ways 11a provided on a rear portion of the bed 11, a column 14 movable back and forth (along a Y-axis) on guide ways 13a provided on an upper surface of the saddle 13, and a spindle head 15 movable up and down (along a Z-axis) on guide ways 14a provided on a front surface of the column 14. The spindle head 15 is covered with a head cover 21.

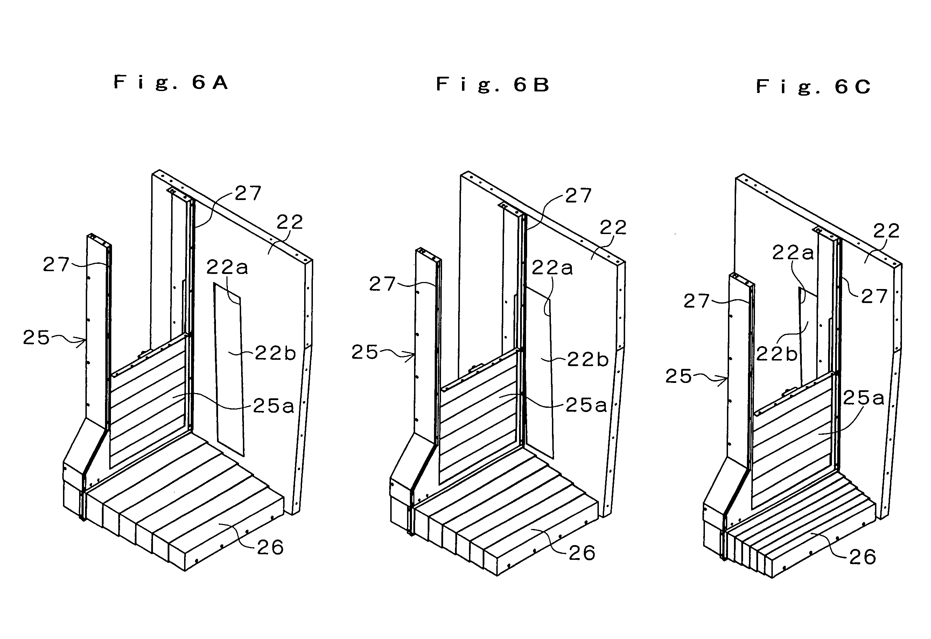

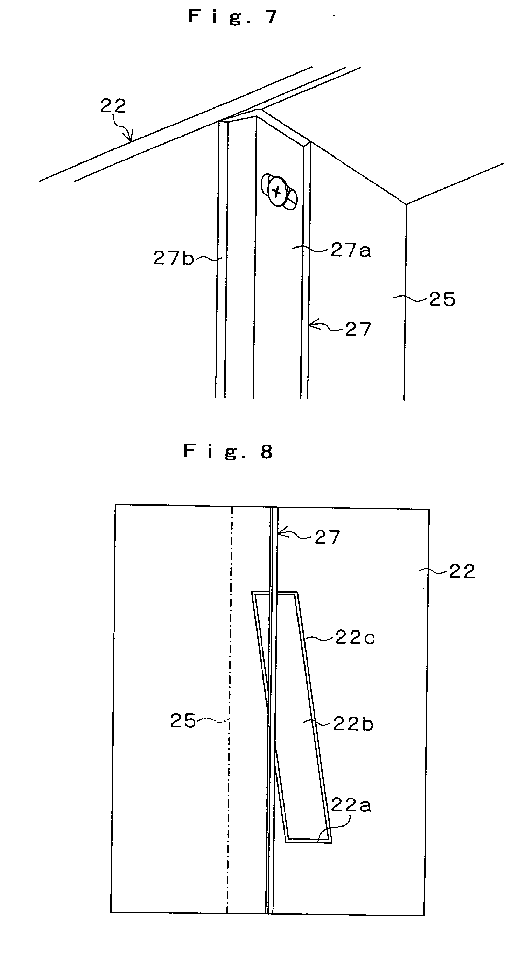

A pair of side covers 22 each formed of a steel plate are provided upright on the saddle 13 on opposite sides of the column 14 with respect to the X-axis as extending along the Y-axis. As shown in Figs. 6A, 6B, 6C and 8, the side covers 22 are each formed with a rhomboidal inspection window 22a having anteroposteriorly inclined longitudinal edges. An open/close door 22b having a slightly smaller size than the inspection window 22a and openable for inspection is removably fitted in the inspection window 22a. Therefore, a fitting groove 22c is present in the surface of the side cover 22 between the open/close door 22b and the peripheral edge of the inspection window 22a.

Further, a pair of cover units 23 are provided at opposite ends of the bed 11 with respect to the X-axis. The cover units 23 respectively accommodate cover sheets 23a which are wound to be paid out as biased in a winding direction. The cover sheets 23a paid out of the respective cover units 23 are connected to front edges of the paired side covers 22 via cover connectors 24 each formed of a steel plate.

Therefore, a region where the saddle guide ways 11a and a ball thread (not shown) as a saddle driving mechanism are disposed is completely isolated from a machining region by the cover sheets 23a paid out of the cover units 23, the cover connectors 24 and the side covers 22, whereby the saddle guide ways and the ball thread are protected from chips and the like.

A front cover 25 for covering the spindle head guide ways 14a and a ball thread (not shown) as a spindle head driving mechanism is attached to the column 14 below the head cover 21 surrounding the spindle head 15. The front cover 25 includes an extendible portion 25a which extends and contracts in accordance with the up-and-down movement of the spindle head 15.

An extendible cover 26 for covering the column guide way 13a and a ball thread (not shown) as a column moving mechanism is attached to a lower edge of the front cover 25. The extendible cover 26 extends and contracts in accordance with the back-and-forth movement of the column 14 (see Figs. 6A, 6B and 6C).

As shown in Figs. 6A, 6B and 6C, small gaps are defined between surfaces of the side covers 22 and opposite side edges of the front cover 25 movable back and forth along the Y-axis together with the column 14. For closing the gaps, elongate seal members 27 are respectively attached to the opposite side edges of the front cover 25 as extending perpendicularly to the Y-axis. In Figs. 6A, 6B and 6C, structural elements such as the column 14, the spindle head 15 and the head cover 21 are not shown for easier understanding of the movement of the front cover 25 relative to the side covers 22.

As shown in Fig. 7, the seal members 27 each include a generally rigid support portion 27a supported by the associated side edge of the front cover 25, and a lip-shaped flexible edge portion 27b connected to the support portion 27a. The edge portion 27b projecting from the support portion 27a at a predetermined angle is kept in press contact with the surface of the side cover 22. Therefore, the seal member 27 is slidable on the surface of the side cover 22 as the front cover 25 is moved back and forth along the Y-axis together with the column 14.

As described above, the fitting groove 22c defined between the peripheral edge of the inspection window 22a and the open/close door 22b fitted in the inspection window 22a is present in the surface of the side cover 22 on which the seal member 27 is slide. However, the inspection window 22a has a rhomboidal shape having anteroposteriorly inclined longitudinal edges as described above, whereas the seal member 27 is supported by the front cover 25 as extending perpendicularly to the Y-axis. In the sealing structure, therefore, the edge of the seal member 27 intersects parts of the fitting groove 22c extending along the inclined longitudinal edges of the inspection window 22a as shown in Fig. 8, when the seal member 27 passes over the inspection window 22a.

Therefore, there is no possibility that the flexible edge portion 27b of the seal member 27 enters the parts of the fitting groove extending along the inclined longitudinal edges of the inspection window 22a when the seal member 27 passes over the inspection window 22a. Therefore, the breakage or deformation of the flexible edge portion 27b of the seal member 27 can assuredly be prevented, leading to more reliable sealing performance.

In the embodiment described above, the inspection window 22a has a rhomboidal shape having anteroposteriorly inclined longitudinal edges, so that the seal member 27 attached to the front cover 25 as extending perpendicularly to the Y-axis intersects the fitting groove 22c present in the surface of the side cover 22 between the peripheral edge of the inspection window 22a and the open/close door 22b. However, the present invention is not limited to this arrangement. For example, the inspection window provided in the side cover 22 may have a rectangular or square shape having a pair of vertically extending opposite edges. In this case, the seal member 27 attached to the front cover 22 is inclined with respect to the Y-axis. This arrangement also allows the seal member 27 to intersect the fitting groove present in the surface of the side cover 22.

Further, the embodiment described above is directed to the case where the fitting groove is present between the peripheral edge of the inspection window 22a and the open/close door 22b in the surface of the side cover 22 on which the seal member 27 is slid. However, the present invention is not limited to the case. The present invention is also applicable to a case, for example, where the side cover is formed by combining a plurality of steel plates with each other with their end faces abutting against each other and, hence, has an abutment groove along a juncture between the steel plates . Even in this case, the same effect can be provided by allowing the seal member to intersect the abutment groove.

Further, the embodiment described above is directed to the vertical machining center 1 employing the sealing structure in which the gaps defined between the surfaces of the side covers 22 and the side edges of the front cover 25 are closed by the seal members 27 respectively attached to the side edges of the front cover 25. However, the present invention is not limited to this sealing structure, but is applicable to various types of sealing structures for closing a gap defined between a surface of an object having a thin groove such as a fitting groove or an abutment groove and a member movable on the surface of the object by a seal member attached to the movable member in sliding contact with the surface of the object.

While the present invention has been described in detail by way of the embodiment thereof, it should be understood that the foregoing disclosure is merely illustrative of the technical principles of the present invention but not limitative of the same. The spirit and scope of the present invention are to be limited only by the appended claims.

## Claims

1. A sealing structure comprising:
an object having a surface having a thin groove;
a member movable on the surface of the object with a gap defined between the movable member and the surface of the object; and
a seal member attached to the movable member and having a flexible edge portion kept in sliding contact with the surface of the object for closing the gap by the flexible edge portion;
wherein the seal member, which is moved in sliding contact with the surface of the object as the movable member is moved, is disposed as intersecting the thin groove present in the surface of the object.

2. A sealing structure for a machine tool comprising:
a saddle movable laterally on a bed;
a column movable back and forth on the saddle;
a front cover attached to the column as covering a front surface of the column;
a side cover having a surface having a thin groove, and provided upright on the saddle along a direction of movement of the column with a gap defined between the side cover and a side edge of the front cover; and
a seal member attached to the front cover and having a flexible edge portion kept in sliding contact with the surface of the side cover for closing the gap by the flexible edge portion;
wherein the seal member, which is moved in sliding contact with the surface of the side cover as the column is moved, is disposed as intersecting the thin groove present in the surface of the side cover.

3. A sealing structure as set forth in claim 2,
wherein the side cover has an inspection window,
wherein an open/close door having a slightly smaller size than the inspection window is removably fitted in the inspection window,
wherein the thin groove is a fitting groove defined when the open/close door is fitted in the inspection window.

4. A sealing structure as set forth in claim 3,
wherein the seal member extends vertically,
wherein the inspection window has a rhomboidal shape having four edges inclined with respect to a vertical line.

5. A sealing structure as set forth in claim 3,
wherein the seal member is inclined toward a front or rear side with respect to a vertical line,
wherein the inspection window has a rectangular or square shape having a pair of vertically extending opposite edges.

6. A sealing structure as set forth in claim 2,
wherein the side cover comprises a plurality of steel plates combined with each other with opposed end faces thereof abutting against each other.
wherein the thin groove is an abutment groove defined along a juncture between the steel plates as extending vertically.

7. A sealing structure as set forth in claim 2,
wherein the column comprises a spindle head movable up and down on the front surface thereof,
wherein the front cover comprises an extendible portion which extends and contracts in accordance with the up-and-down movement of the spindle head.

8. A sealing structure as set forth in claim 2, further comprising cover units provided at laterally opposite ends of the bed,
wherein the cover units respectively accommodate cover sheets which are wound so as to be paid out as biased in a winding direction,
wherein the cover sheets paid out of the cover units are each connected to a front edge of the side cover via a cover connector.

9. A sealing structure as set forth in claim 2, further comprising an extendible cover attached to a lower edge of the front cover, the extendible cover being adapted to extend and contract in accordance with the back-and-forth movement of the column.
